(19) Europäisches Patentamt
European Patent Office
Office européen des brevets

(11) **EP 2 652 465 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(21) Anmeldenummer: **10805783.7**

(22) Anmeldetag: **16.12.2010**

(51) Int Cl.:
**G01F 23/296** (2006.01)

(86) Internationale Anmeldenummer:
**PCT/EP2010/069984**

(87) Internationale Veröffentlichungsnummer:
**WO 2012/079640 (21.06.2012 Gazette 2012/25)**

(54) **BESTIMMUNG VON MEDIENEIGENSCHAFTEN BEI DER FÜLLSTANDMESSUNG**

DETERMINATION OF MEDIA CHARACTERISTICS DURING FILLING LEVEL MEASUREMENT

DÉTERMINATION DE PROPRIÉTÉS DE FLUIDE LORS DE LA MESURE D'UN NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2013 Patentblatt 2013/43**

(73) Patentinhaber: **VEGA Grieshaber KG**
**77709 Wolfach (DE)**

(72) Erfinder:
• **WELLE, Roland**
**77756 Hausach (DE)**

• **GRIESSBAUM, Karl**
**77796 Mühlenbach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
EP-A1- 1 906 158   WO-A1-2008/132470
FR-A1- 2 751 744   US-A- 4 364 273

**Beschreibung**

Die Erfindung betrifft die Bestimmung von Medieneigenschaften bei der Messung von Füllständen aller Art. Insbesondere betrifft die Erfindung eine Füllstandmessvorrichtung, die nach einem Laufzeitverfahren arbeitet, eine Füllstandmessanordnung, eine Verwendung und ein Verfahren zur Füllstandmessung.

Technischer Hintergrund

Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet ein Sensor die vom Füllgut, den Behältereinbauten und dem Behälter selbst reflektierten Echosignale auf, und leitet daraus den jeweiligen Füllstand ab.

Zu den Füllstandsensoren, welche nach einem Laufzeitverfahren arbeiten, mögen beispielsweise Sensoren gehören, welche unter Verwendung von Ultraschall, Radar, geführtem Radar, FMCW - Radar, Impuls - Radar, CW - Radar oder Laser den Abstand zu einer Füllgutoberfläche bestimmen. Weiterhin mögen alle Sensoren, welche eine Welle absenden, und deren von einer Füllgutoberfläche reflektierten Anteile wieder empfangen und auswerten, als Füllstandsensoren, welche nach einem Laufzeitverfahren arbeiten, definiert sein.

Bei der Verwendung akustischer oder optischer Wellen breitet sich das vom Füllstandmessgerät erzeugte Signal im Allgemeinen frei in Richtung der zu vermessenden Füllgutoberfläche aus. Bei Geräten, welche Radarwellen zur Vermessung der Füllgutoberfläche benutzen, kommt sowohl eine freie Ausbreitung in Richtung des zu vermessenden Mediums in Betracht, als auch eine Ausbreitung im Inneren eines Hohlleiters, welcher die Radarwellen vom Füllstandmessgerät zum Medium führt. Bei Geräten nach dem Prinzip der geführten Mikrowelle werden die hochfrequenten Signale entlang eines Wellenleiters zum Medium hin geführt.

An der Oberfläche des zu vermessenden Mediums wird ein Teil der ankommenden Signale reflektiert, und gelangt nach entsprechender Laufzeit wieder zurück zum Füllstandmessgerät. Die nicht reflektierten Signalanteile dringen in das Medium ein, und breiten sich entsprechend den physikalischen Eigenschaften des Mediums in diesem weiter in Richtung des Behälterbodens aus. Am Behälterboden werden diese Signale reflektiert, und gelangen nach Passage des Mediums und der überlagerten Atmosphäre wieder zurück zum Füllstandmessgerät.

Das Füllstandmessgerät empfängt die an verschiedenen Stellen reflektierten Signale und bestimmt daraus nach bekannten Verfahren die Distanz zum Füllgut.

Die bestimmte Distanz zum Füllgut wird nach außen hin bereitgestellt. Die Bereitstellung kann analoger Form (4..20 mA Schnittstelle) oder auch in digitaler Form (Feldbus) realisiert werden.

Der prinzipielle Aufbau von Radar-Füllstandsensoren wird im Buch von Peter Devine: Füllstandmessung mit Radar Leitfaden für die Prozessindustrie (ISBN 3-00-008216-6) ausführlich dargestellt.

Es wurde festgestellt, dass Füllstandmessergebnisse, die auf Radar-Füllstandsensoren beruhen, oft nicht präzise sind.

DE 10 2006 019 191 A1, WO 2010/071564 A1 und WO 2006/103200 A1 beschreiben Verfahren zur Füllstandmessung, welche die Genauigkeit erhöhen sollen.

EP 1 906 158 A1 beschreibt eine Radarfüllstandmessanordnung mit freistrahlenden Radarsignalen, welche Messungen bei verschiedenen Füllständen und zu verschiedenen Zeiten vornimmt.

Zusammenfassung der Erfindung

Es ist eine Aufgabe der Erfindung, ein alternatives Verfahren und eine alternative Vorrichtung zur Füllstandmessung anzugeben.

Es sind eine Füllstandmessvorrichtung, die nach einem Laufzeitverfahren arbeitet, eine Füllstandmessanordnung, eine Verwendung und ein Verfahren zur Füllstandmessung gemäß den Merkmalen der unabhängigen Patentansprüche angegeben. Weiterbildungen der Erfindung ergeben sich aus den Unteransprüchen.

Gemäß einem ersten Aspekt ist eine Füllstandmessvorrichtung, die nach einem Laufzeitverfahren arbeitet, angegeben, welche eine Echokurvenerfassungseinrichtung und eine Auswerteeinrichtung aufweist. Die Echokurvenerfassungseinrichtung dient dem Erfassen einer ersten und zumindest einer zweiten Echokurve. Die erste Echokurve stellt hierbei die Reflexionsverhältnisse entlang einer ersten Messstrecke dar, entlang welcher sich ein erstes Messsignal, das von der Füllstandmessvorrichtung erzeugt wird, zu einer Füllgutoberfläche und/oder Trennschichtoberfläche ausbreitet bzw. bewegt. Die zweite Echokurve bildet die Reflexionsverhältnisse entlang einer zweiten Messstrecke ab, entlang der sich ein zweites, von der Füllstandmessvorrichtung erzeugtes Messsignal zu einer Füllgutoberfläche und/oder Trennschichtoberfläche bewegt.

Die beiden Messsignale benötigen hierbei unterschiedliche Laufzeiten, um zur Füllgutoberfläche zu gelangen, da sie verschiedene elektrische Distanzen auf ihrem Weg zur Füllgutoberfläche zurückzulegen haben. Diese verschiedenen elektrischen Distanzen ergeben sich beispielsweise aus einer unterschiedlichen physikalischen Wegstrecke oder teilweise unterschiedlichen Ausbreitungsgeschwindigkeiten der beiden Messsignale auf ihrem Weg entlang der entsprechenden Messstrecke.

Die Auswerteeinrichtung ist zum Auswerten der ersten und der zweiten Echokurve ausgeführt, um daraus zumindest einen Kennwert für ein Überlagerungsmedium zu berechnen, welches sich oberhalb der Füllgutoberfläche und/oder Trennschichtoberfläche befindet.

Bei diesem Überlagerungsmedium handelt es sich beispielsweise um eine zweite, leichtere Flüssigkeit, um Dampf oder um ein Gas oder Gasgemisch.

Gemäß einer Ausführungsform weisen die erste Messstrecke und die zweite Messstrecke verschiedene (physikalische) Längen auf. Dies kann dadurch realisiert sein, dass zwei Antennen vorgesehen sind, welche versetzt zueinander auf unterschiedlichen Höhen im Behälter angeordnet sind. Auch kann dies dadurch realisiert werden, dass die beiden Messsignale auf verschieden langen Wegen zur Füllgutoberfläche und/oder Trennschichtoberfläche geführt werden und somit im Überlagerungsmedium verschieden lange Wege zurücklegen.

Gemäß einer weiteren Ausführungsform weist die Echokurvenerfassungseinrichtung eine erste Füllstandsonde zum Erzeugen der ersten

Echokurve und eine zweite Füllstandsonde zum Erzeugen der zweiten Echokurve auf.

Auch ist es möglich, dass eine einzige Füllstandsonde vorgesehen ist, welche zur Erzeugung beider Echokurven genutzt wird, die dann aber auf verschiedenen Wegen zur Füllgutoberfläche (und zurück) geführt werden.

Gemäß einer weiteren Ausführungsform ist der zumindest eine Kennwert ausgewählt aus der Gruppe bestehend aus Permeabilität, Permittivität, Druck, Temperatur, und Sättigungsgrad des Überlagerungsmediums.

Gemäß einer weiteren Ausführungsform weist die Echokurvenerfassungseinrichtung weiterhin einen ersten Wellenleiter und einen zweiten Wellenleiter auf. Die erste Messstrecke erstreckt sich entlang des ersten Wellenleiters und die zweite Messstrecke erstreckt sich entlang des zweiten Wellenleiters, der eine andere physikalische Länge aufweist, als der erste Wellenleiter.

Gemäß einer weiteren Ausführungsform ist die Auswerteeinrichtung zur Berechnung des Produkts aus Permittivität und Permeabilität des Überlagerungsmediums oberhalb der Füllgutoberfläche und/oder Trennschichtoberfläche ausgeführt, um mit Hilfe dieses Ergebnisses dann die Lage der Füllgutoberfläche oder die Lage der Trennschicht zu bestimmen.

Gemäß einer weiteren Ausführungsform weist die Echokurvenerfassungseinrichtung einen ersten Wellenleiter und einen zweiten Wellenleiter auf. Die erste Messstrecke erstreckt sich entlang des ersten Wellenleiters und die zweite Messstrecke erstreckt sich entlang des zweiten Wellenleiters, der dieselbe physikalische Länge aufweist, wie der erste Wellenleiter.

Gemäß einer weiteren Ausführungsform weist der zweite Wellenleiter ein Dielektrikum auf, damit sich die Laufzeit des zweiten Messsignals entlang der zweiten Messstrecke verlängert (im Vergleich zu einem entsprechenden Wellenleiter, der zwar dieselbe Länge aber kein Dielektrikum aufweist).

Auf diese Weise ist es möglich, dass die beiden Signale unterschiedliche Laufzeiten aufweisen, obwohl die physikalische Distanz, die sie zum Füllgut zurücklegen, dieselbe ist.

Gemäß einer weiteren Ausführungsform weist die Echokurvenerfassungseinrichtung einen einzelnen Koaxialwellenleiter zum Leiten der beiden Messsignale auf, wobei das erste Messsignal entlang der äußeren Oberfläche des Koaxialwellenleiters geführt ist und wobei das zweite Messsignal im Inneren des Koaxialwellenleiters geführt ist.

Gemäß einer weiteren Ausführungsform ist das Innere des Koaxialwellenleiters zumindest teilweise mit einem Dielektrikum gefüllt, wenn die Laufzeit des zweiten Messsignals entlang der zweiten Messstrecke länger ist, als die Laufzeit des ersten Messsignals entlang der ersten Messstrecke.

Gemäß einer weiteren Ausführungsform handelt es sich bei dem ersten und/oder dem zweiten Messsignal um ein elektromagnetisches Signal oder ein akustisches Signal.

Als Füllstandmessgeräte kommen somit Füllstandradare oder Ultraschallgeräte oder Geräte, die nach dem Prinzip der geführten Mikrowelle arbeiten, in Betracht.

Gemäß einem weiteren Aspekt ist eine Füllstandmessanordnung zur Messung des Füllstands in einem Behälter angegeben, welche eine oben und im Folgenden beschriebene Füllstandmessvorrichtung sowie einen Behälter zur

Aufnahme eines Füllguts, dessen Füllstand von der Füllstandmessvorrichtung bestimmt werden soll, aufweist.

Die Füllstandmessvorrichtung befindet sich beispielsweise zumindest teilweise im Inneren des Behälters.

Gemäß einem weiteren Aspekt ist die Verwendung einer oben und im Folgenden beschriebenen Füllstandmessvorrichtung zur Bestimmung des Produkts aus Permittivität und Permeabilität eines Überlagerungsmediums oberhalb der Füllgutoberfläche und/oder Trennschichtoberfläche angegeben.

Gemäß einem weiteren Aspekt ist ein Verfahren zur Füllstandmessung angegeben, bei dem eine erste und zumindest eine zweite Echokurve erfasst werden und diese beiden Echokurven ausgewertet werden, um daraus zumindest einen Kennwert für ein Überlagerungsmedium zu berechnen, welches sich oberhalb der Füllgutoberfläche und/oder Trennschichtoberfläche befindet. Dieses Verfahren kann beispielsweise mit einer oben und im Folgenden beschriebenen Füllstandmessvorrichtung ausgeführt werden.

An dieser Stelle sei darauf hingewiesen, dass Merkmale, die im Folgenden beispielsweise im Hinblick auf die Füllstandmessvorrichtung beschrieben werden, auch als Verfahrensschritte in dem Verfahren implementiert werden können, und umgekehrt.

Kurze Beschreibung der Figuren

Fig. 1 zeigt eine Anordnung zur Füllstandmessung.

Fig. 2 zeigt eine Auswertung von Echosignalen.

Fig. 3 zeigt eine Anordnung zur Messung in Dampfdruckatmosphären.

Fig. 4 zeigt eine Auswertung von Echosignalen in Dampfdruckatmosphären.

Fig. 5 zeigt eine Anordnung mit Kompensationsecho.

Fig. 6 zeigt eine Füllstandmessanordnung gemäß einem Ausführungsbeispiel der Erfindung.

Fig. 7 zeigt eine Füllstandmessanordnung gemäß einem weiteren Ausführungsbeispiel der Erfindung.

Fig. 8 zeigt eine Füllstandmessanordnung gemäß einem weiteren Ausführungsbeispiel der Erfindung.

Fig. 9 zeigt eine Füllstandmessanordnung gemäß einem weiteren Ausführungsbeispiel der Erfindung.

Fig. 10 zeigt eine Füllstandmessanordnung gemäß einem weiteren Ausführungsbeispiel der Erfindung.

Fig. 11 zeigt eine Füllstandmessanordnung gemäß einem weiteren Ausführungsbeispiel der Erfindung.

Fig. 12 zeigt eine Füllstandmessanordnung gemäß einem weiteren Ausführungsbeispiel der Erfindung.

Fig. 13 zeigt Auswerteeinrichtungen für eine Füllstandmessvorrichtung gemäß weiteren Ausführungsbeispielen der Erfindung.

Fig. 14 zeigt ein Flussdiagramm eines Verfahrens gemäß einem Ausführungsbeispiel der Erfindung.

Detaillierte Beschreibung von Ausführungsbeispielen

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet werden.

Allen Verfahren gemein ist, dass sich die zur Messung verwendeten Signale auf dem Weg vom Füllstandmessgerät hin zur Füllgutoberfläche und/oder Trennschichtoberfläche im Normalfall im Einflussbereich eines weiteren Mediums befinden, welches nachfolgend als Überlagerungsmedium bezeichnet werden soll.

Ein Überlagerungsmedium ist ein Medium oder ein Gemisch verschiedener Medien, welches sich zwischen der Aussendestelle des Messsignals des Füllstandmessgeräts (beispielsweise der Antenne des Füllstandmessgerätes) und der Oberfläche des zu vermessenden Mediums oder zwischen der Aussendestelle des Messsignals des Füllstandmessgeräts (beispielsweise der Antenne des Füllstandmessgerätes) und einer sich zwischen zwei Flüssigkeiten ausbildenden Trennschichtoberfläche befindet. Das Überlagerungsmedium wird im Allgemeinen durch eine Flüssigkeit oder eine gasförmige Atmosphäre dargestellt.

In der überwiegenden Zahl an Anwendungsfällen befindet sich oberhalb des zu vermessenden Mediums Luft. Da sich die Ausbreitung elektromagnetischer Wellen in Luft nur unwesentlich von der in Vakuum unterscheidet, bedarf es oft keiner besonderen Korrekturen der Signale, welche vom Füllgut, den Behältereinbauten und dem Behälter selbst durch die Luft hindurch zum Füllstandmessgerät zurück reflektiert werden, um eine ausreichende Messgenauigkeit zu erzielen.

In Prozessbehältern der chemischen Industrie können weiterhin aber alle Arten von chemischen Gasen und Gasgemischen als Überlagerungsmedium auftreten. In Abhängigkeit von den physikalischen Eigenschaften dieser Gase oder Gasgemische werden die Ausbreitungseigenschaften elektromagnetischer Wellen im Vergleich zu einer Ausbreitung im Vakuum oder in Luft verändert.

Darüber hinaus können äußere Einflüsse auf das Überlagerungsmedium einwirken. Beispiele hierfür sind sich verändernde Temperaturen und Drücke, welche ebenfalls zu veränderten Ausbreitungseigenschaften der elektromagnetischen Wellen führen.

Weiterhin kann das Überlagerungsmedium auch durch eine Flüssigkeit oder eine Nebelschicht, d.h. eine gesättigte Gasatmosphäre, in welcher kleinste Flüssigkeitspartikel verteilt sind, dargestellt werden kann. Abhängig von den vorgegebenen Ausprägungen verändern sich wiederum die Ausbreitungseigenschaften elektromagnetischer Wellen.

Werden die Einflüsse des Überlagerungsmediums auf die Ausbreitungseigenschaften der zur Messung verwendeten Signale im Füllstandmessgerät nicht ausreichend berücksichtigt, so ergeben sich deutliche Messfehler, welche zu unbefriedigenden Messergebnissen führen.

Die nachfolgenden Ausführungen konzentrieren sich auf den sehr wichtigen Bereich der Füllstandmessung mit Hilfe elektromagnetischer Wellen. Es sei darauf hingewiesen, dass auch bei der Verwendung akustischer Wellen signifikante Einflüsse des Überlagerungsmediums auf die Ausbreitungseigenschaften der Wellen bestehen. Akustische Wellen werden durch verschiedene Medien, Temperatur, Druck oder Nebel in ihrer Ausbreitung ebenfalls beeinflusst. Es ist möglich, die nachfolgend dargestellten Ausführungsbeispiele der Erfindung zur Bestimmung der Eigenschaften des Überlagerungsmediums, welche zu veränderten Ausbreitungseigenschaften führen, vom Anwendungsfall elektromagnetischer Wellen auf den Anwendungsfall akustischer Wellen zu übertragen.

Die Kompensation der Einflüsse eines Überlagerungsmediums auf die Ausbreitungseigenschaften eines zur Füllstandmessung verwendeten Signals ist auf verschiedene Weisen möglich.

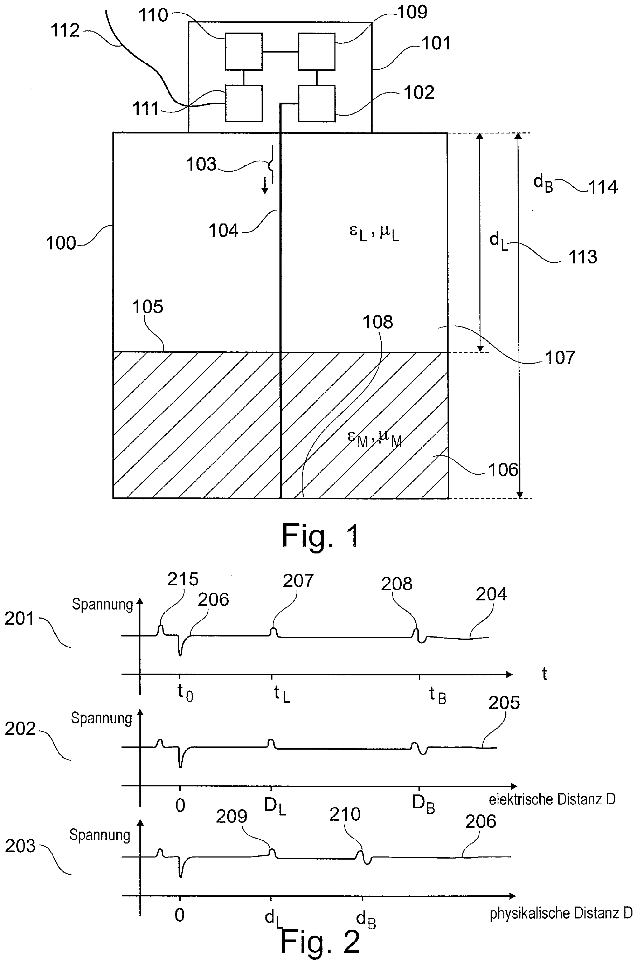

Fig. 1 zeigt eine Anordnung zur Füllstandmessung. Der Behälter 100 ist bis zu einer Füllhöhe $d_B - d_L$ mit einer Flüssigkeit 106 gefüllt. Der Raum über der Flüssigkeit 107 sei zunächst mit Luft gefüllt.

Nachfolgend sei definiert, dass das Medium, das sich zwischen der Stelle der Aussendung der vom Füllstandmessgerät (101) zur Messung verwendeten Signale und der zu vermessenden Oberfläche 105 befindet, als Überlagerungsmedium bezeichnet werden kann. Bei dem Überlagerungsmedium handelt es sich demnach beispielsweise um das oder die Medien, welche sich zwischen der Quelle des Messsignals des Füllstandmessgeräts und der zu vermessenden Oberfläche befinden, und welche vom dem Sendesignal und/oder dem Empfangssignal durchlaufen werden. Im Wesentlichen kann dies beispielsweise die Behälteratmosphäre sein. Im vorliegenden Fall wird die Flüssigkeit im Behälter mit Luft als Überlagerungsmedium bedeckt.

Das Füllstandmessgerät 101 erzeugt mit Hilfe einer Hochfrequenzeinheit 102 einen elektromagnetischen Impuls 103 und koppelt diesen auf einen Wellenleiter 104 ein, woraufhin sich dieser Impuls annähernd mit Lichtgeschwindigkeit in Richtung der zu vermessenden Füllgutoberfläche 105 entlang des Wellenleiters ausbreitet.

Der Wellenleiter ist im vorliegenden Beispiel in Form eines Stabes ausgeführt. Selbstverständlich sind aber alle in der Literatur beschriebenen Wellenleiter, also insbesondere Doppel- oder Mehrdrahtleitungen oder auch Koaxialleiter, einsetzbar. Die Füllgutoberfläche 105 reflektiert einen Teil der ankommenden Signalenergie, woraufhin sich der reflektierte Signalanteil entlang des Wellenleiters 104 wieder zurück zum Füllstandmessgerät 101 fortpflanzt. Der nicht reflektierte Signalanteil dringt in die Flüssigkeit 106 ein, und pflanzt sich darin mit stark verminderter Geschwindigkeit entlang des Wellenleiters 104 fort. Die Geschwindigkeit $c_{Medium}$ der elektromagnetischen Welle 103 innerhalb der Flüssigkeit 106 wird durch die Materialeigenschaften der Flüssigkeit 106 bestimmt:

$$C_{Medium} = \frac{c_0}{\sqrt{\varepsilon_R \cdot \mu_R}}$$

wobei $c_0$ die Lichtgeschwindigkeit im Vakuum, $\varepsilon_R$ die Permittivitätszahl der Flüssigkeit und $\mu_R$ die Permeabilitätszahl der Flüssigkeit beschreibt. Am unteren Ende 108 des Wellenleiters 104 wird der verbliebene Signalanteil ebenfalls reflektiert, und gelangt nach entsprechender Laufzeit wieder zurück zum Füllstandmessgerät 101. Im Füllstandmessgerät werden die ankommenden Signale mit Hilfe der Hochfrequenzeinheit 102 aufbereitet, und vorzugsweise in einen niederfrequenteren Zwischenfrequenzbereich transformiert. Mit Hilfe einer Analog-Digital-Wandlereinheit 109 werden die analogen Echokurven, welche von der Hochfrequenzeinheit 102 bereitgestellt werden, digitalisiert und einer Auswerteeinheit 110 zur Verfügung gestellt. Die Auswerteeinheit 110 analysiert die digitalisierte Echokurve, bestimmt auf Basis der darin enthaltenen Echos nach bekannten Verfahren dasjenige Echo, das von der Reflektion an der Füllgutoberfläche 105 erzeugt wurde. Zudem bestimmt die Auswerteeinheit die exakte Distanz bis zu diesem Echo. Weiterhin wird die exakte Distanz zum Echo derart korrigiert, dass Einflüsse des Überlagerungsmediums 107 auf die Ausbreitung der elektromagnetischen Wellen kompensiert werden. Die so errechnete, kompensierte Distanz zum Füllgut 113 wird einer Ausgabeeinheit 111 bereitgestellt, welche den bestimmten Wert entsprechend den Vorgaben des Benutzers weiter aufbereitet, beispielsweise durch Linearisierung, Offsetkorrektur, Umrechnung in eine Füllhöhe $d_B - d_L$. Der aufbereitete Messwert wird an einer externen Kommunikationsschnittstelle 112 nach außen hin bereitgestellt. Hierbei können alle etablierten Schnittstellen verwendet werden, insbesondere 4..20mA - Stromschnittstellen, industrielle Feldbusse wie HART, Profibus, FF, oder aber auch Computerschnittstellen wie RS232, RS485, USB, Ethernet, FireWire.

Fig. 2 verdeutlicht nochmals im Detail wichtige Schritte, die im Rahmen der Echosignalverarbeitung in der Auswerteeinheit 110 zur Kompensation der Einflüsse verschiedener Medien angewendet werden können.

Der Kurvenzug 201 zeigt zunächst die von der Analog-Digital-Wandlereinheit 109 über der Zeit hinweg erfasste Echokurve 204. Die Echokurve beinhaltet zunächst den Sendeimpuls 215. Kurze Zeit später wird zum Zeitpunkt $t_0$ eine erste Reflektion 206 erfasst, welche durch die Einkopplung des Hochfrequenzsignals auf den Wellenleiter 104 verursacht wird. Eine weitere Reflektion 207 entstammt der Füllgutoberfläche 105 und wird zum Zeitpunkt $t_L$ erfasst. Das vom unteren Ende 108 des Wellenleiters 104 erzeugte Echo 208 wird schließlich zum Zeitpunkt $t_B$ erfasst.

In einem ersten Verarbeitungsschritt wird die zeitabhängige Kurve 201 in eine distanzabhängige Kurve 202 transformiert. Während dieser Transformation wird davon ausgegangen, dass sich die erfasste Kurve ausschließlich durch eine Ausbreitung im Vakuum gebildet hat. Die Ordinate der Darstellung 201 wird durch Multiplikation mit der Lichtgeschwindigkeit im Vakuum in eine Distanzachse umgerechnet. Zudem wird durch Verrechnung eines Offsets erreicht, dass das von der Einkopplung des Hochfrequenzsignals verursachte Echo 206 den Distanzwert 0m erhält.

Die zweite Darstellung 202 zeigt die Echokurve als Funktion der elektrischen Distanz D. Die elektrische Distanz entspricht derjenigen Distanz, die eine elektromagnetische Welle im Vakuum in einer bestimmten Zeit zurücklegt. Die elektrische Distanz berücksichtigt keinerlei Einflüsse eines Mediums, welche möglicherweise zu einer langsameren Ausbreitung der elektromagnetischen Wellen führen. Kurvenzug 202 stellt daher eine unkompensierte, aber auf Orte bezogene Echokurve dar.

In der vorliegenden Anmeldung werden elektrische Distanzen immer mit Großbuchstaben D bezeichnet, wohingegen physikalische Distanzen, welche direkt am Behälter nachgemessen werden können, mit kleinen Buchstaben d bezeichnet werden.

Es mag weiterhin möglich sein, die Echokurve 205 vollständig zu kompensieren. Die dritte Darstellung 203 zeigt eine vollkompensierte Echokurve 206. Um eine Darstellung der Echos über der physikalischen Distanz zu erreichen, muss im vorliegenden Fall der Einfluss des Überlagerungsmediums 107 im Bereich zwischen den Orten 0 und $D_L$ (Kurvenzug 202) berücksichtigt werden. Die elektrischen Distanzangaben der Abszisse müssen zwischen 0 und $D_L$ in physikalische Distanzangaben gemäß folgendem Zusammenhang umgerechnet werden:

$$d_i = \frac{D_i}{\sqrt{\varepsilon_L \cdot \mu_L}}$$

Da $\varepsilon_L$ und $\mu_L$ in guter Näherung dem Wert 1 entsprechen, muss für diesen Abschnitt im vorliegenden Beispiel keine Korrektur erfolgen. Die elektrischen Distanzangaben der Abszisse zwischen $D_L$ und $D_B$ müssen jedoch in physikalische Distanzangaben gemäß folgendem Zusammenhang umgerechnet werden:

$$d_i = d_L + \frac{(D_i - D_L)}{\sqrt{\varepsilon_M \cdot \mu_M}}$$

Die dritte Darstellung 203 zeigt schließlich den korrigierten Verlauf. Sowohl die Distanz zum Echo der Füllgutoberfläche 209 als auch die Distanz des vom unteren Ende 108 des Wellenleiters 104 erzeugten Echos 208, 210 stimmen mit den am Behälter 100 nachmessbaren Distanzen 113, 114 überein.

Es sei an dieser Stelle darauf hingewiesen, dass die Umsetzung in Kurvenzug 202, also die Bestimmung der elektrischen Distanzen verschiedener Echos, im Rahmen der Signalverarbeitung, im Gerät für alle Echos durchgeführt werden kann. Die Umsetzung der Echokurve in eine kompensierte Echokurve wird im Allgemeinen nicht durchgeführt, genügt doch die Korrektur eines einzelnen Füllstandwertes.

Für den Anwendungsfall aus Fig.I ergeben sich in Bezug auf die Distanz zwischen Sensor und Füllgutoberfläche aufgrund vorab bekannter Werte für die Permittivitätszahl und die Permeabilitätszahl der Luft in der praktischen Anwendung keine Probleme.

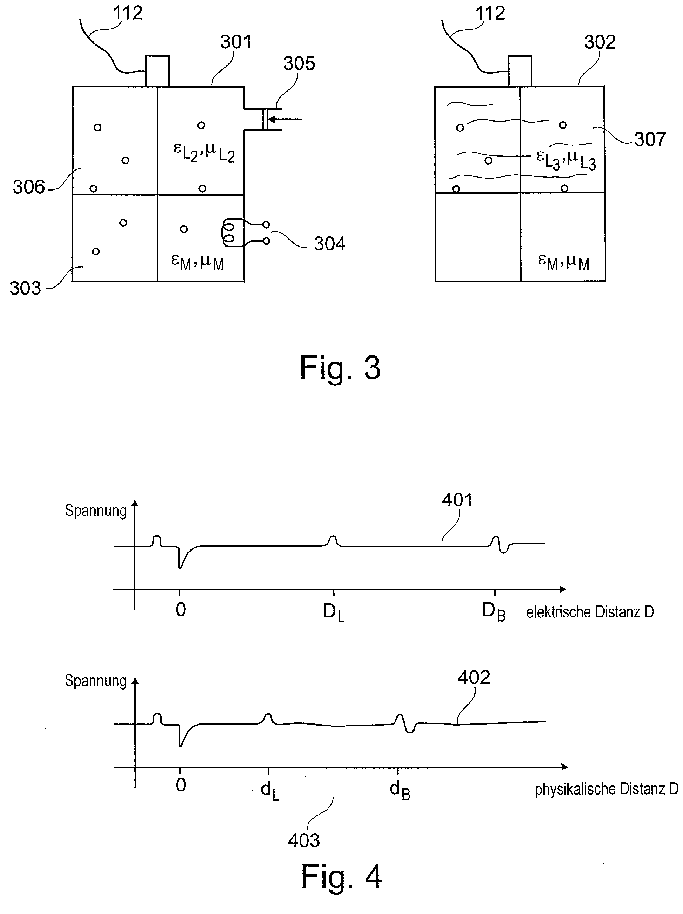

Fig. 3 zeigt im Gegensatz dazu zwei Anwendungen, die eine Korrektur erfordern. Behälter 301 zeigt den Fall einer Sattdampfanwendung. Die im Behälter befindliche Flüssigkeit 303 kann über eine Heizung 304 erhitzt werden, und beginnt zu verdampfen. Gleichzeitig ist es möglich, den Druck im Behälter über eine Druckerzeugungseinrichtung 305 während der Betriebsphase zu verändern. Aufgrund physikalischer Gesetzmäßigkeiten verändern sich bedingt durch diese Randbedingungen die Werte für die Permittivitätszahl und die Permeabilitätszahl der Überlagerungsatmosphäre 306 während der Betriebsphase des Sensors. Weiterhin ist eine Messung in einem Behälter 302 möglich, in welchem ein chemisches Gas oder Gasgemisch 307 als Überlagerungsatmosphäre dient. Im Allgemeinen sind die Werte für die Permittivitätszahl und die Permeabilitätszahl der Überlagerungsatmosphäre auch in diesem Fall nicht bekannt.

Fig. 4 zeigt die teilkompensierte Echokurve 401, wie sie anhand der Anwendung 301, 302 mit einer von Luft verschiedenen Überlagerungsatmosphäre vom Sensor erfasst werden kann. Die Auswerteeinheit 110 mag zwar in der Lage sein, die elektrische Distanz $D_L$ bis zum Füllgut zu ermitteln, eine Korrektur dieser Distanz und damit eine Berechnung der zugehörigen physikalischen Distanz $d_L$ 403 ist ohne Kenntnis der Materialeigenschaften der Überlagerungsatmosphäre jedoch nicht möglich.

Um die Materialeigenschaften der Überlagerungsatmosphäre dennoch automatisch korrigieren zu können, kommt eine manuelle Eingabe der Kennwerte der Materialeigenschaften durch den Anwender in Betracht. Neben der wenig komfortablen Inbetriebnahme kann dieses Verfahren immer dann Probleme bereiten, wenn sich die Materialeigenschaften der Überlagerungsatmosphäre während des Betriebes verändern. Es mag möglich sein, Druck und Temperatur mit separaten Sensoren zu erfassen, um damit die veränderten Materialeigenschaften zu bestimmen. Dies führt jedoch zu erhöhten Anforderungen hinsichtlich der zu verwendenden Geräte.

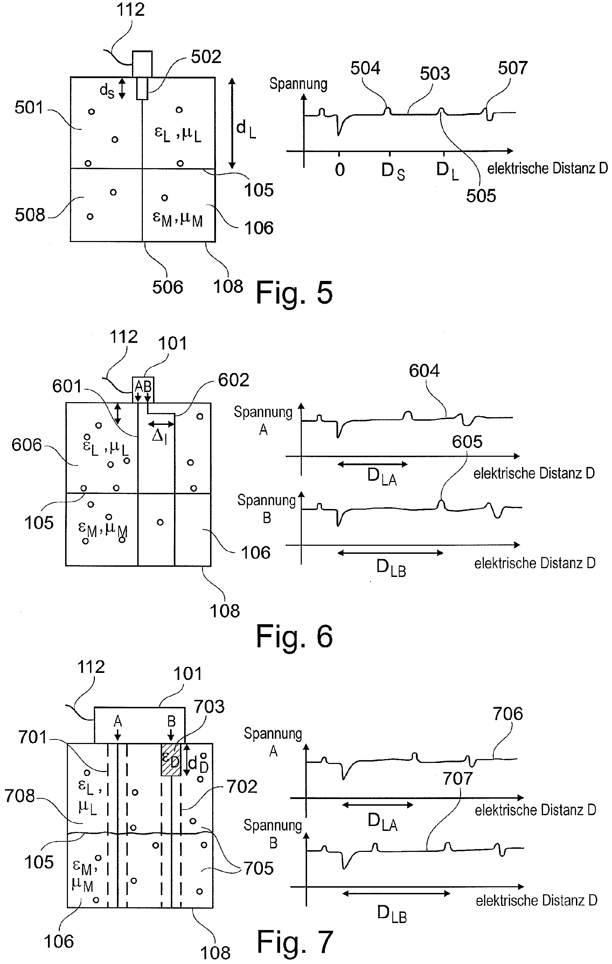

Möglich ist daher im Rahmen der Füllstandmessung eine Anordnung, wie sie in Fig. 5 gezeigt ist. Die Anordnung ist derart konstruiert, dass in einer vorab bekannten, physikalischen Entfernung $d_S$ eine definierte Störstelle 502 angebracht wird. Anhand der vom Sensor erfassten Echokurve 503 kann die elektrische Distanz $D_S$ des zugehörigen Echos 504 bestimmt werden. Das Produkt der Materialeigenschaften der Überlagerungsatmosphäre kann somit gemäß

$$\varepsilon_L \cdot \mu_L = \left(\frac{D_S}{d_S}\right)^2$$

fortlaufend bestimmt werden. Eine Umrechnung der ermittelten elektrischen Distanz $D_L$ des Füllgutechos 505 in die zugehörige physikalische Distanz $d_L$ kann mit Hilfe des oben ermittelten Kennwertes leicht erfolgen.

In der praktischen Anwendung können durch den Einsatz eines oder mehrerer Referenzechos Probleme verursacht werden. Zum einen kann ein Großteil der Signalenergie am Referenzecho bereits reflektiert werden, und steht somit zur Messung des eigentlichen Füllstandechos nicht mehr zur Verfügung. Zum anderen besteht das Problem, dass im Falle einer Überdeckung des Referenzechos mit dem Füllgut eine Messung der Materialeigenschaften nicht oder nur mehr schwer möglich ist. Zudem kann durch die Überlagerung des Referenzechos und des Füllgutechos die Genauigkeit der Messung des Füllstandes wesentlich verschlechtert werden. Weiterhin sind Verfahren möglich, die das vorab beschriebene Prinzip der Referenzechovermessung nicht durch eine künstlich eingebrachte Reflexionsstelle 502 realisieren, sondern als Referenzecho die Reflexion 507 des Endes des Wellenleiters 506 auswerten. In der Praxis kann dieser Ansatz daran scheitern, dass bedingt durch sehr gute Reflexionseigenschaften des Mediums 508 nur ein sehr kleiner Teil der vom Sensor generierten Signalenergie überhaupt bis an das Ende des Wellenleiters 506 gelangt, und somit die Amplitude des erzeugten Echos derart klein ist, dass es anhand der empfangenen Echokurve 503 nicht mehr ausgewertet werden kann.

Fig. 6 zeigt eine Vorrichtung gemäß einem Ausführungsbeispiel der Erfindung. Die Vorrichtung besitzt einen ersten Wellenleiter 601 sowie einen zweiten Wellenleiter 602, welcher sich durch entsprechende geometrische Gestaltung in seiner physikalischen Länge vom ersten Wellenleiter unterscheidet. Selbstverständlich sind an dieser Stelle alle Ausführungsformen bekannter Wellenleiter verwendbar, also insbesondere Doppel- oder Mehrdrahtleitungen oder auch Koaxialleiter.

Das Füllstandmessgerät führt nun gleichzeitig zwei separate Messungen A und B durch. Die Reflektionen der Messung A, welche mit Hilfe des Wellenleiters 601 durchgeführt wird, werden vom Füllstandmessgerät erfasst und in Form einer digitalisierten Echokurve 604 in der Auswerteeinheit 110 weiter analysiert. Die Auswerteeinheit 110 (siehe Fig. 1) bestimmt insbesondere die elektrische Distanz $D_{LA}$ zur Oberfläche des zu vermessenden Mediums nach bekannten Verfahren. Weiterhin werden die Reflektionen der Messung B, welche mit Hilfe des Wellenleiters 602 durchgeführt wird, vom Füllstandmessgerät erfasst und in Form einer weiteren digitalisierten Echokurve 605 in der Auswerteeinheit 110 weiter analysiert. Die Auswerteeinheit 110 bestimmt wiederum die elektrische Distanz $D_{LB}$ zur Oberfläche des zu vermessenden Mediums nach bekannten Verfahren. Das Produkt der Materialeigenschaften der Überlagerungsatmosphäre 606 kann auf Basis dieser Werte und dem ab Werk bekannten Längenunterschied Δ1 zwischen den beiden Wellenleitern folgendermaßen ermittelt werden:

$$\varepsilon_L \cdot \mu_L = \left( \frac{D_{LB} - D_{LA}}{\Delta l} \right)^2$$

Auf Basis der ermittelten Materialeigenschaft erfolgt anschließend, beispielsweise in der Auswerteeinheit (110), eine Bestimmung des physikalischen Abstandes zur Füllgutoberfläche nach bekannten Verfahren.

Fig. 7 zeigt eine Vorrichtung gemäß einem weiteren Ausführungsbeispiel der Erfindung. Die Vorrichtung besitzt einen ersten Wellenleiter 701 sowie einen zweiten Wellenleiter 702, welcher die gleiche geometrische Länge aufweist, durch konstruktive Maßnahmen aber derart ausgeführt ist, dass ein von der Hochfrequenzeinheit 102 erzeugtes Signal eine größere Zeitspanne zum Durchlaufen der Strecke zur Füllgutoberfläche 105 benötigt als bei einer vergleichbaren Messung im ersten Wellenleiter 701. Im vorliegenden Ausführungsbeispiel werden zwei Koaxialleiter als Wellenleiter genutzt, wobei der zweite Koaxialleiter 702 im oberen Bereich mit einem bekannten Dielektrikum 703 auf einer vorab definierten Länge ausgefüllt ist. Die Koaxialleiter besitzen entlang ihrer Längenausdehnung regelmäßig angeordneter Öffnungen zum Behälterraum 705, um ein Eindringen des Mediums in den Wellenleiter zu ermöglichen. Selbstverständlich sind an dieser Stelle alle Ausführungsformen bekannter Wellenleiter verwendbar, also insbesondere Doppel- oder Mehrdrahtleitungen oder auch Einzelleitungen.

Das erfindungsgemäße Füllstandmessgerät führt nun gleichzeitig zwei separate Messungen A und B durch. Die Reflektionen der Messung A, welche mit Hilfe des Wellenleiters 701 durchgeführt wird, werden vom Füllstandmessgerät erfasst und in Form einer digitalisierten Echokurve 706 in der Auswerteeinheit 110 weiter analysiert. Die Auswerteeinheit 110 bestimmt insbesondere die elektrische Distanz $D_{LA}$ zur Oberfläche des zu vermessenden Mediums nach bekannten Verfahren. Weiterhin werden die Reflektionen der Messung B, welche mit Hilfe des Wellenleiters 702 durchgeführt wird, vom Füllstandmessgerät erfasst und in Form einer weiteren digitalisierten Echokurve 707 in der Auswerteeinheit 110 (siehe Fig. 1) analysiert. Die Auswerteeinheit 110 bestimmt die elektrische Distanz $D_{LB}$ zur Oberfläche des zu vermessenden Mediums nach bekannten Verfahren. Das Produkt der Materialeigenschaften der Überlagerungsatmosphäre 708 kann auf Basis dieser Werte, der ab Werk bekannten Dielektrizitätszahl $\varepsilon_D$ des Dielektrikums 703 und der ab Werk bekannten Länge $d_D$ des Dielektrikums folgendermaßen ermittelt werden:

$$\varepsilon_L \cdot \mu_L = \left( \sqrt{\varepsilon_D} - \frac{D_{LB} - D_{LA}}{d_D} \right)^2$$

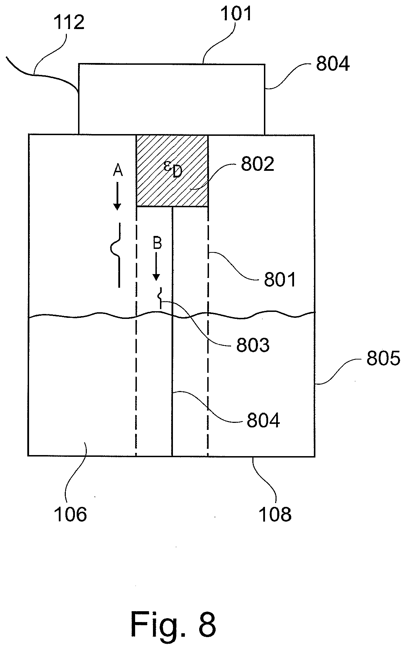

Auf Basis der ermittelten Materialeigenschaft erfolgt anschließend eine Bestimmung des physikalischen Abstandes zur Füllgutoberfläche nach bekannten Verfahren. Fig. 8 zeigt eine Vorrichtung gemäß einem weiteren Ausführungsbeispiel der Erfindung. Diese Variante verwendet eine einzige Sonde zur Vermessung zweier Messkanäle auf einem einzigen Koaxialleiter. Im Inneren des Koaxialleiters 801 sorgt ein Dielektrikum 802 für eine Verzögerung des Signals 803. Die Messung A auf der äußeren Oberfläche des Koaxialleiters 801 bleibt von dieser Änderung im Inneren unbeeinflusst. Die dargestellte Variante stellt eine besonders vorteilhafte Ausführungsform dar, da das erfindungsgemäße Füllstandmessgerät (804) auch in diesem Fall nur eine einzige Prozessöffnung des Behälters 805 belegt.

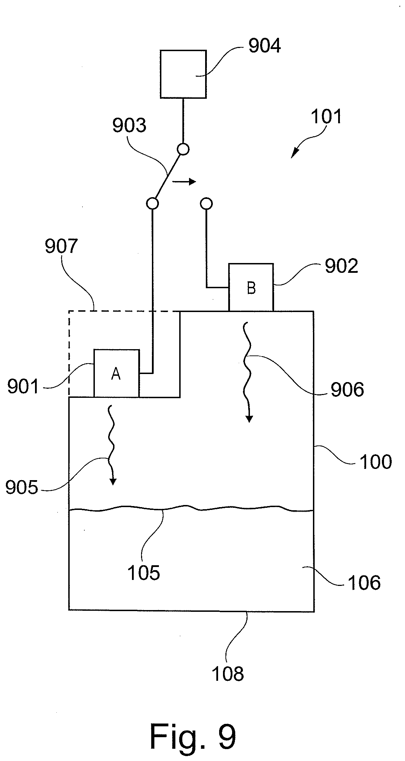

Weiterhin ist es möglich, durch Kombination verschiedener Materialien eine weitere Variante gemäß Fig. 8 zu konstruieren, welche ohne Verwendung eines vollflächigen Dielektrikums eine unterschiedliche Laufzeit entlang der Sonde realisiert. Fig. 9 zeigt eine Füllstandmessanordnung mit einem Füllstandmessgerät 101, welches zur Messung des Füllstands in einen Behälter 100 eingesetzt wird.

Es sind zwei Füllstandsonden 901, 902 vorgesehen, welche versetzt zueinander in verschiedenen Höhen über der Füllgutoberfläche 105 angeordnet sind. Hierfür weist die Oberseite des Behälters beispielsweise eine stufenförmige Form auf. Auch kann es natürlich sein, dass die untere Sonde 901 im Behälter angebracht ist (symbolisiert durch die gestrichelte Linie 907), wohingegen die obere Sonde 902 im Bereich der Behälterdecke angebracht ist.

Bei den beiden Sonden 901, 902 handelt es sich beispielsweise um Füllstandradarantennen oder Ultraschallantennen, welche ein elektromagnetisches oder akustisches Sendesignal 905 bzw. 906 zur Füllgutoberfläche 105 hin abstrahlen. Gemäß der Erfindung handelt es sich um Füllstandradarantennen, welche ein elektromagnetisches Signal abstrahlen.

Die beiden Signale 905, 906 legen in der Behälteratmosphäre, also durch das Überlagerungsmedium, das sich oberhalb der Füllgutoberfläche 105 befindet, unterschiedlich lange Wegstrecken zurück.

Die beiden Sonden 901, 902 sind über eine Weiche 903 an die Sendesignalerzeugung und Empfangssignalauswertung 904 angeschlossen. Auf diese Weise können die beiden Sonden 901, 902 abwechselnd senden und empfangen, ohne dass hierfür zwei getrennte Elektroniken 904 erforderlich sind.

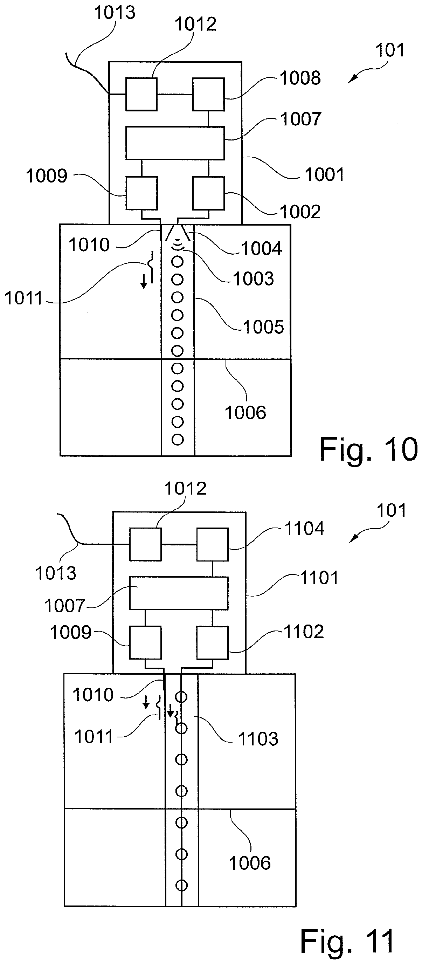

Fig. 10 zeigt eine Vorrichtung gemäß einem weiteren Ausführungsbeispiel der Erfindung. Das Füllstandmessgerät 101 strahlt die in einer ersten Hochfrequenzeinheit 1002 erzeugte Radarwelle 1003 über eine Antenne 1004 in das Innere eines Standrohres 1005 ab. Aufgrund der Reflektion an der Füllgutoberfläche 1006 ist das Füllstandmessgerät 1001 in der Lage, nach bekanntem Stand der Technik eine Echokurve zu bilden, und diese mit Hilfe der Analog-Digital-Wandlereinheit 1007 zu digitalisieren. Auswerteeinheit 1008 bestimmt anhand dieser digitalisierten Echokurve zumindest einen Kennwert für das Niveau der Füllgutoberfläche 1006.

Es sei ergänzend darauf hingewiesen, dass diese erste Bestimmung eines Füllstandes im Inneren eines Standrohres mit verschiedenen Messprinzipien realisiert werden kann. Beispiele sind Füllstandmessungen auf Basis von Ultraschall oder Laser oder aber auch Füllstandmessungen mit Hilfe konduktiver oder kapazitiver Vermessung des Innenraumes des Standrohres.

Weiterhin ist das Füllstandmessgerät 1001 ausgeführt, mit Hilfe einer zweiten Hochfrequenzeinheit 1009 einen elektromagnetischen Impuls 1011 zu generieren, und diesen mit Hilfe einer geeigneten Einkopplung 1010 auf die Außenseite des Standrohres 1005 zu leiten. Der elektromagnetische Impuls 1011 bewegt sich entlang der Oberfläche des Standrohres 1005 fort, und wird an der Oberfläche 1006 des zu vermessenden Mediums reflektiert. Die zweite Hochfrequenzeinheit 1009 bereitet aus den reflektierten Signalen nach bekannten Verfahren eine Echokurve auf, welche in der Analog-Digital-Wandlereinheit 1007 digitalisiert wird. Auswerteeinheit 1008 bestimmt anhand dieser digitalisierten zweiten Echokurve zumindest einen Kennwert für das Niveau der Füllgutoberfläche 1006.

Weiterhin ist die Auswerteeinheit 1008 in der Lage, unter Verwendung zumindest eines der zuvor ermittelten Kennwerte zumindest einen Kennwert für das Niveau der Füllgutoberfläche 1006 zu ermitteln, welcher nach weiterer Verrechnung durch die Ausgabeeinheit 1012 an einer der bekannten Schnittstellen 1013 bereitgestellt wird.

Es sei auch möglich, dass die Auswerteeinheit 1008 erweiterte Informationen auf Basis der beiden Messungen ermittelt, darunter: ASSET-Informationen, Zuverlässigkeit der Messung, Verschmutzung des Standrohres, etc.

Weiterhin sei daraufhingewiesen, dass die Konstruktion des Standrohres (1005) mit mehreren Bohrungen nur eine spezielle Variante darstellt. Denkbar sind auch Konstruktionen ohne Bohrungen, mit Schlitzen, irregulär verteilten Öffnungen, etc.

Fig. 11 zeigt eine Vorrichtung gemäß einem weiteren Ausführungsbeispiel der Erfindung. Das Standrohr wird in dieser Variante durch einen Koaxialleiter 1103 gebildet, welcher Teil des Füllstandmessgerätes 1101 ist. Das Niveau 1006 der Flüssigkeit im Inneren dieses Leiters wird mit Hilfe eines zweiten elektromagnetischen Impulses, welcher von einer dritten Hochfrequenzeinheit 1102 erzeugt wird, bestimmt. Die zweite Hochfrequenzeinheit 1009 entspricht derjenigen aus Fig. 5, und wird dazu benutzt, das Niveau 1006 der Flüssigkeit entsprechend dem oben dargestellten Verfahren entlang der äußeren Oberfläche des Standrohres 1103 zu messen. Die dargestellte Ausführungsform verwendet also zwei voneinander unabhängige Messungen nach dem Prinzip der geführten Mikrowelle zur Füllstandbestimmung.

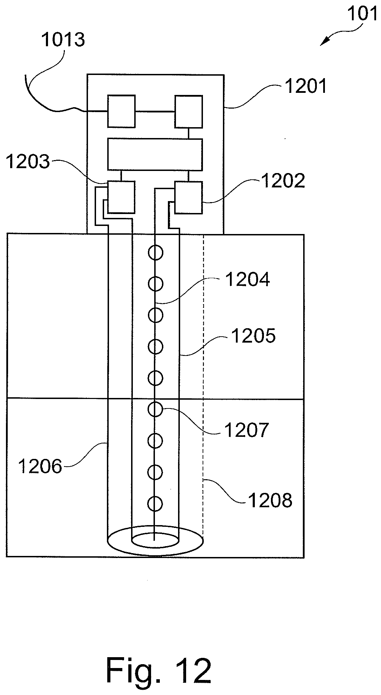

Fig. 12 zeigt eine Vorrichtung gemäß einem weiteren Ausführungsbeispiel der Erfindung. Das Füllstandmessgerät 1201 besitzt wiederum zwei voneinander unabhängige Hochfrequenzeinheiten 1202, 1203, welche genutzt werden, nach dem Prinzip der geführten Mikrowelle den Füllstand auf zwei verschiedenen Wegen zu messen. Die erste Messung verwendet den inneren Koaxialleiter (Innenleiter 1204, Außenleiter 1205) zur Bestimmung des Füllstandniveaus. Die zweite Messung verwendet den äußeren Koaxialleiter, welcher aus dem Ummantelungsrohr 1206 als Außenleiter und dem Rohr 1205 als Innenleiter besteht, zur Bestimmung eines Füllstandwertes. Der innere Koaxialleiter und der äußere Koaxialleiter besitzen im vorliegenden Fall regelmäßige Bohrungen, welche ein Eindringen der zu messenden Flüssigkeit erlauben. Dies stellt selbstverständlich nur eine konkrete Ausführungsform dar.

Es sei hiermit offenbart, dass die Grundidee der vorliegenden Erfindung mit Anordnungen gemäß den Figuren 10, 11 und 12 realisiert werden kann. Es mag einem Fachmann möglich sein, die offenbarten Anordnungen der Figuren 10, 11 und 12 derart zu modifizieren und/oder zu ergänzen, dass damit unterschiedliche Laufzeiten der Signale in zwei unterschiedlichen Messkanälen realisiert werden. Beispielsweise mag es immer möglich sein, die Ausbreitung in einem bestimmten Signalweg durch Einbringung dielektrischer Materialien zu verlangsamen.

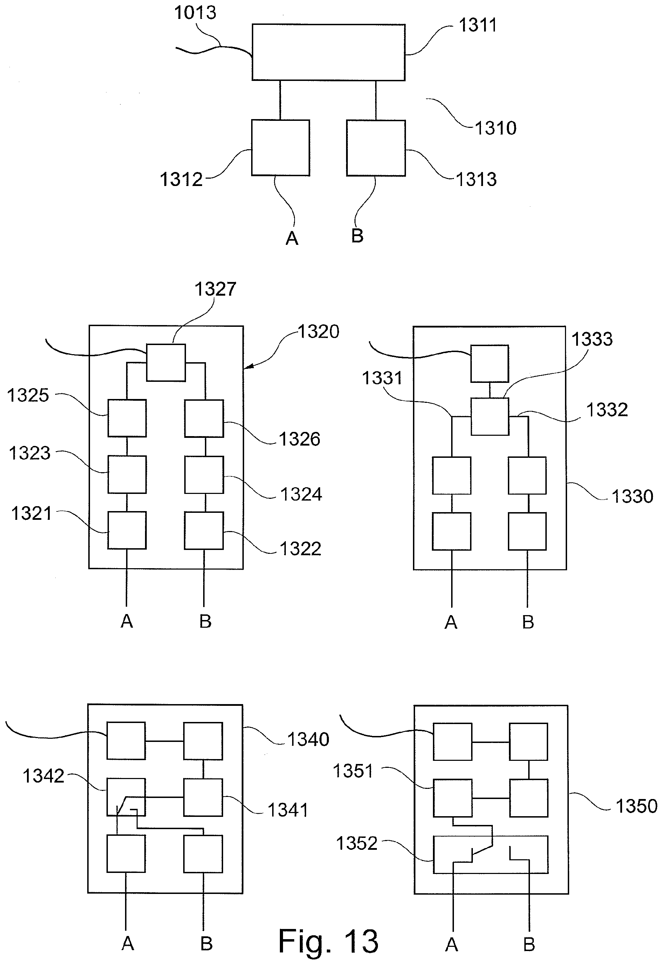

Fig. 13 zeigt verschiedene Auswerteeinheiten 110 gemäß weiteren Ausführungsbeispielen der Erfindung für eine Vorrichtung zur Füllstandmessung. Im Gegensatz zu den vorab vorgestellten Varianten verschiedener Sonden werden hier einige denkbare Ausgestaltungen einer entsprechenden Geräteelektronik vorgestellt.

Es ist zu beachten, dass die Sondenanschlüsse der bislang vorgestellten Sonden in den Darstellungen der Fig. 13 durch die Buchstaben A und B abstrahiert sind.

Es ist möglich, eine erfindungsgemäße Vorrichtung durch die Kombination zweier kompletter Elektronikeinsätze 1312, 1313 konventioneller Füllstandmessgeräte 101 zu implementieren. Die Elektronikeinsätze mögen nach verschiedenen Prinzipien arbeiten, passend zur Ausgestaltung der verwendeten Sondeneinkopplungen an den Anschlüssen A und B. Eine übergeordnete Auswerteeinheit 1311 verrechnet die von den Elektronikeinsätzen 1312, 1313 bereitgestellten, einzelnen Füllstandswerte (aus Messung A und B) und bildet daraus zumindest einen Messwert, der an einer externen Schnittstelle 1013 bereitgestellt wird.

Darstellung 1320 zeigt den Aufbau einer weiteren Elektronikvariante. Die Funktionalität dieser Variante entspricht der aus Darstellung 1310, wobei die Hochfrequenzerzeugungseinheit 1321, die Analog-Digital-Wandlereinheit 1323 und die Auswerteeinheit 1325 in Kombination in der Lage sind, eine erste Messung durchzuführen, und weiterhin die Hochfrequenzerzeugungseinheit 1322, die Analog-Digital-Wandlereinheit 1324 und die Auswerteeinheit 1326 in Kombination in der Lage sind, einen zweiten Messwert zu bilden. Die Messwerte werden durch eine geeignete Programmlogik in der Ausgabeeinheit 1327 miteinander verrechnet und nach außen hin bereitgestellt. Es sei daraufhingewiesen, dass in dieser Struktur Messung B auch nach einem alternativen Messprinzip realisiert werden kann. Die Hochfrequenzeinheit 1322 muss dann durch eine passende Einheit (Lasererzeugungseinheit, Ultraschallerzeugungseinheit) ersetzt werden.

Eine weitere Realisierungsvariante gemäß Darstellung 1330 entspricht derjenigen aus Darstellung 1320, nutzt für die Auswertung der digitalisierten Echokurven, welche an den Anschlüssen 1331 und 1332 bereitgestellt werden, aber eine gemeinsame Auswerteeinheit 1333.

Weiterhin mag es auch möglich sein, die Überführung der Signale in eine digitale Darstellung mit einer einzigen Analog-Digital-Wandlereinheit gemäß Anordnung 1340 durchzuführen. Neben der Analog-Digital-Wandlereinheit 1341 weist die Vorrichtung hierzu einen Analogschalter 1342 auf, welcher die analogen, niederfrequenten Signale in einem Zeitmultiplex an die Analog-Digital-Wandlereinheit 1341 weiterleitet.

Die Anordnung 1350 nutzt darüber hinaus vorteilhaft die vorhandene Struktur einer vorhandenen Hochfrequenzeinheit 1351 eines Sensors, und ergänzt diese um einen Hochfrequenzumschalter 1352. Durch diese Variante lässt sich ein besonders einfacher Aufbau einer Vorrichtung gemäß der vorliegenden Erfindung erreichen.

Zudem mögen verschiedene Beschichtungen der Sonde im Inneren und/oder im Äußeren geeignet sein, eine unterschiedliche Laufzeit der Signale zu bewirken.

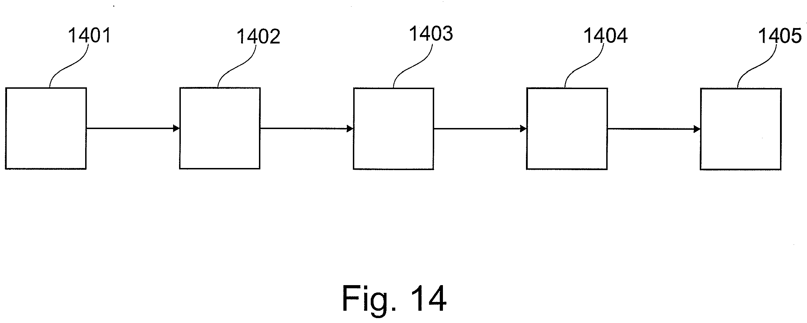

Fig. 14 zeigt ein Flussdiagramm eines Verfahrens gemäß einem Ausführungsbeispiel der Erfindung. In Schritt 1401 wird eine erste Echokurve erfasst und in Schritt 1402 wird eine zweite Echokurve erfasst. Die beiden Echokurven spiegeln die Reflexionsverhältnisse entlang einer ersten Messstrecke bzw. entlang einer zweiten Messstrecke wider, wobei die verwendeten Signale auf ihrem Weg zur Füllgutoberfläche verschiedene elektrische Distanzen zurücklegen, also unterschiedliche Laufzeiten benötigen.

In Schritt 1403 wird die erste Echokurve und in Schritt 1404 wird die zweite Echokurve ausgewertet. Dies kann beispielsweise innerhalb derselben Auswerteelektronik erfolgen. In Schritt 1405 werden aus den beiden Ergebnissen dieser Auswertungen Kennwerte berechnet, welche mit dem Überlagerungsmedium zusammenhängen. Bei diesen Kennwerten handelt es sich beispielsweise um das Produkt aus Permittivität und Permeabilität des Überlagerungsmediums. Unter Verwendung dieser Kennwerte erfolgt dann eine exakte Füllstandberechnung in Schritt 1405.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugzeichen in den Ansprüchen sind nicht als Einschränkungen anzusehen.

**Patentansprüche**

1. Füllstandmessvorrichtung (101), die nach einem Laufzeitverfahren arbeitet und elektromagnetische Wellen verwendet, die Vorrichtung aufweisend:

     eine Echokurvenerfassungseinrichtung zum Erfassen einer ersten und einer zweiten Echokurve;
     wobei die Füllstandmessvorrichtung so ausgestaltet ist, dass die erste Echokurve die Reflexionsverhältnisse entlang einer ersten Messstrecke (601, 701, 801, 905), entlang der sich ein erstes Messsignal zu einer Füllgutoberfläche oder Trennschichtoberfläche bewegt, abbildet;
     wobei die Füllstandmessvorrichtung so ausgestaltet ist, dass die zweite Echokurve die Reflexionsverhältnisse entlang einer zweiten Messstrecke (602, 702, 802, 906), entlang der sich ein zweites Messsignal zu der Füllgutoberfläche oder der Trennschichtoberfläche bewegt, abbildet;
     wobei die Füllstandmessvorrichtung so ausgestaltet ist, dass die beiden Messsignale verschiedene Laufzeiten zur Füllgutoberfläche oder Trennschichtoberfläche (105) benötigen, selbst wenn sie gleichzeitig ausgesendet wurden;
     wobei die beiden Messsignale elektromagnetische Signale sind;
     weiterhin aufweisend:

     eine Auswerteeinrichtung (110) zum Auswerten der ersten und der zweiten Echokurve, um daraus zumindest einen Kennwert für ein Überlagerungsmedium zu berechnen, welches sich oberhalb der Füllgutoberfläche oder Trennschichtoberfläche befindet;
     wobei der zumindest eine Kennwert das Produkt aus Permeabilität und Permittivität ist.

2. Füllstandmessvorrichtung nach Anspruch 1, wobei die erste Messstrecke (601, 701, 801, 905) und die zweite Messstrecke (602, 702, 802, 906) verschiedene Längen aufweisen.

3. Füllstandmessvorrichtung nach einem der vorhergehenden Ansprüche, die Echokurvenerfassungseinrichtung aufweisend:

     eine erste Füllstandsonde (601, 701, 801, 901) zum Erzeugen der ersten Echokurve;
     eine zweite Füllstandsonde (602, 702, 802, 902) zum Erzeugen der zweiten Echokurve.

4. Füllstandmessvorrichtung nach einem der vorhergehenden Ansprüche, die Echokurvenerfassungseinrichtung aufweisend:

     einen ersten Wellenleiter (601) und einen zweiten Wellenleiter (602);
     wobei sich die erste Messstrecke entlang des ersten Wellenleiters (601) erstreckt; und
     wobei sich die zweite Messstrecke entlang des zweiten Wellenleiters (602) erstreckt, der eine andere physikalische Länge aufweist, als der erste Wellenleiter (601).

5. Füllstandmessvorrichtung nach einem der vorhergehenden Ansprüche, wobei die Auswerteeinrichtung (110) zur Berechnung des Produkts aus Permittivität und Permeabilität des Überlagerungsmediums oberhalb der Füllgutoberfläche oder Trennschichtoberfläche zur Berechnung der Lage der Füllgutoberfläche oder der Lage der Trennschicht ausgeführt ist.

6. Füllstandmessvorrichtung nach einem der Ansprüche 1 bis 3 oder 5, die Echokurvenerfassungseinrichtung aufweisend:

     einen ersten Wellenleiter (701) und einen zweiten Wellenleiter (702);
     wobei sich die erste Messstrecke entlang des ersten Wellenleiters (701) erstreckt; und
     wobei sich die zweite Messstrecke entlang des zweiten Wellenleiters (702) erstreckt, der dieselbe physikalische Länge aufweist, wie der erste Wellenleiter (701).

7. Füllstandmessvorrichtung nach Anspruch 6, wobei der zweite Wellenleiter (702) ein Dielektrikum aufweist, damit sich die Laufzeit des zweiten Messsignals entlang der zweiten Messstrecke verlängert.

8. Füllstandmessvorrichtung nach einem der Ansprüche 1 bis 3 oder 5,

     wobei die Echokurvenerfassungseinrichtung einen einzelnen Koaxialwellenleiter (801) zum Leiten der zwei Messsignale aufweist;
     wobei das erste Messsignal entlang der äußeren Oberfläche des Koaxialwellenleiters (801) geführt wird; und

wobei das zweite Messsignal im Inneren des Koaxialwellenleiters (801) geführt wird.

9. Füllstandmessvorrichtung nach Anspruch 8, wobei das Innere des Koaxialwellenleiters (801) zumindest teilweise mit einem Dielektrikum gefüllt ist, damit die Laufzeit des zweiten Messsignals entlang der zweiten Messstrecke länger ist als die Laufzeit des ersten Messsignals entlang der ersten Messstrecke.

10. Füllstandmessanordnung zur Messung des Füllstands in einem Behälter, aufweisend:

eine Füllstandmessvorrichtung nach einem der Ansprüche 1 bis 9; und
einen Behälter (100) zur Aufnahme eines Füllguts, dessen Füllstand von der Füllstandmessvorrichtung bestimmt werden soll.

11. Verwendung einer Füllstandmessvorrichtung nach einem der Ansprüche 1 bis 9 zur Bestimmung des Produkts aus Permittivität und Permeabilität eines Überlagerungsmediums oberhalb der Füllgutoberfläche oder Trennschichtoberfläche.

12. Verfahren zur Füllstandmessung unter Verwendung elektromagnetischer Wellen, das Verfahren aufweisend die folgenden Schritte:

Erfassen einer ersten und einer zweiten Echokurve;
Auswerten der ersten und der zweiten Echokurve, um daraus zumindest einen Kennwert für ein Überlagerungsmedium zu berechnen, welches sich oberhalb der Füllgutoberfläche oder Trennschichtoberfläche befindet;
wobei die erste Echokurve die Reflexionsverhältnisse entlang einer ersten Messstrecke (601, 701, 801, 905), entlang der sich ein erstes Messsignal zur Füllgutoberfläche oder Trennschichtoberfläche bewegt, abbildet;
wobei die zweite Echokurve die Reflexionsverhältnisse entlang einer zweiten Messstrecke (602, 702, 802, 906), entlang der sich ein zweites Messsignal zur Füllgutoberfläche oder Trennschichtoberfläche bewegt, abbildet;
wobei die beiden Messsignale verschiedene Laufzeiten zur Füllgutoberfläche oder Trennschichtoberfläche (105) benötigen, selbst wenn sie gleichzeitig ausgesendet wurden;
wobei die beiden Messsignale elektromagnetische Signale sind;
wobei der zumindest eine Kennwert das Produkt aus Permeabilität und Permittivität ist.

## Claims

1. A fill level measuring device (101) which operates according to a transit time method and applies electromagnetic waves, the device comprising:

an echo curve detecting device for detecting a first and a second echo curve;
wherein the fill level measuring device is designed such that the first echo curve depicts the reflection relations along a first measuring path (601, 701, 801, 905), along which a first measuring signal moves to a filling material surface or separating layer surface;
wherein the level measuring device is designed such that the second echo curve depicts the reflection relations along a second measuring path (602, 702, 802, 906), along which a second measuring signal moves to the filling material surface or the separating layer surface;
wherein the level measuring device is designed such that the two measuring signals require different transit times to the filling material surface or the separating layer surface (105), even if they were emitted simultaneously;
wherein the two measuring signals are electromagnetic signals;
further comprising:

an evaluation device (110) for evaluating the first and the second echo curve in order to calculate therefrom at least one characteristic value for an superimposed medium which is located above the filling material surface or the separating layer surface;
wherein the at least one characteristic value is the product of permeability and permittivity.

2. Fill level measuring device according to claim 1, wherein the first measuring path (601, 701, 801, 905) and the second measuring path (602, 702, 802, 906) have different lengths.

3. Fill level measuring device according to any of the preceding claims, wherein the echo curve detecting device comprises:

a first fill level probe (601, 701, 801, 901) for generating the first echo curve;
a second fill level probe (602, 702, 802, 902) for generating the second echo curve.

4. Fill level measuring device according to any of the preceding claims, wherein the echo curve detecting device comprises:

a first waveguide (601) and a second waveguide (602);
wherein the first measuring path extends along the first waveguide (601); and
wherein the second measuring path extends along the second waveguide (602) which has a different physical length than the first waveguide (601).

5. Fill level measuring device according to any of the preceding claims,
wherein the evaluation device (110) is configured to calculate the product of permittivity and permeability of the superimposed medium above the filling material surface or the separating layer surface for calculating the position of the filling material surface or the position of the separating layer.

6. Fill level measuring device according to any of claims 1 to 3 or 5, wherein the echo curve detecting means comprises:

a first waveguide (701) and a second waveguide (702);
wherein the first measuring path extends along the first waveguide (701); and
wherein the second measuring path extends along the second waveguide (702), which comprises the same physical length as the first waveguide (701).

7. Fill level measuring device according to claim 6,
wherein the second waveguide (702) comprises a dielectric for extending the transit time of the second measuring signal along the second measuring path.

8. Fill level measuring device according to any of claims 1 to 3 or 5,
wherein the echo curve detecting device comprises a single coaxial waveguide (801) for conducting the two measuring signals;
wherein the first measurement signal is guided along the outer surface of the coaxial waveguide (801); and
wherein the second measuring signal is guided in the interior of the coaxial waveguide (801).

9. Fill level measuring device according to claim 8,
wherein the interior of the coaxial waveguide (801) is at least partially filled with a dielectric, so that the transit time of the second measuring signal along the second measuring path is longer than the transit time of the first measuring signal along the first measuring path.

10. Fill level measuring arrangement for measuring the fill level in a container, comprising:

a fill level measuring device according to any of claims 1 to 9; and

a container (100) for receiving a filling material whose fill level is to be determined by the fill level measuring device.

11. Use of a fill level measuring device according to any of claims 1 to 9 for determining the product of permittivity and permeability of a superimposed medium above the filling material surface or the separating layer surface.

12. Method for fill level measurement using electromagnetic waves, the method comprising the following steps:

detecting a first and a second echo curve;
evaluating the first and the second echo curve, in order to calculate at least one characteristic value for a superimposed medium which is located above the filling material surface or the separating layer surface;
wherein the first echo curve depicts the reflection relations along a first measuring path (601, 701, 801, 905), along which a first measuring signal moves to the filling material surface or the separating layer surface;
wherein the second echo curve depicts the reflection relations along a second measuring path (602, 702, 802, 906), along which a second measuring signal moves to the filling material surface or the separating layer surface;
wherein the two measuring signals require different transit times to the filling material surface or separating layer surface (105), even if they were emitted simultaneously;
where the two measuring signals are electromagnetic signals;
wherein the at least one characteristic value is the product of permeability and permittivity.

**Revendications**

1. Dispositif de mesure de niveau de remplissage (101) qui fonctionne selon un procédé de mesure du temps de propagation et utilise des ondes électromagnétiques, le dispositif présentant :

un moyen de détection de courbe d'écho pour détecter une première et une deuxième courbe d'écho ;
dans lequel le dispositif de mesure de niveau de remplissage est conçu de telle sorte que la première courbe d'écho représente les conditions de réflexion le long d'un premier parcours de mesure (601, 701, 801, 905) le long duquel un premier signal de mesure se déplace vers une surface de produit de remplissage ou une surface de couche de séparation ;

dans lequel le dispositif de mesure de niveau de remplissage est conçu de telle sorte que la deuxième courbe d'écho représente les conditions de réflexion le long d'un deuxième parcours de mesure (602, 702, 802, 906) le long duquel un deuxième signal de mesure se déplace vers la surface de produit de remplissage ou la surface de couche de séparation ;

dans lequel le dispositif de mesure de niveau de remplissage est conçu de telle sorte que les deux signaux de mesure prennent des temps de propagation différents jusqu'à la surface de produit de remplissage ou la surface de couche de séparation (105), même s'ils ont été émis simultanément ;

dans lequel les deux signaux de mesure sont des signaux électromagnétiques ;

présentant en outre :

un moyen d'évaluation (110) pour évaluer la première et la deuxième courbe d'écho afin de calculer à partir de celles-ci au moins une valeur caractéristique pour un milieu de recouvrement qui se trouve au-dessus de la surface de produit de remplissage ou de la surface de couche de séparation ;

dans lequel ladite au moins une valeur caractéristique est le produit de la perméabilité et de la permittivité.

2. Dispositif de mesure de niveau de remplissage selon la revendication 1,

dans lequel le premier parcours de mesure (601, 701, 801, 905) et le deuxième parcours de mesure (602, 702, 802, 906) présentent des longueurs différentes.

3. Dispositif de mesure de niveau de remplissage selon l'une des revendications précédentes, le moyen de détection de courbe d'écho présentant :

une première sonde de niveau de remplissage (601, 701, 801, 901) pour générer la première courbe d'écho ;

une deuxième sonde de niveau de remplissage (602, 702, 802, 902) pour générer la deuxième courbe d'écho.

4. Dispositif de mesure de niveau de remplissage selon l'une des revendications précédentes, le moyen de détection de courbe d'écho présentant :

un premier guide d'ondes (601) et un deuxième guide d'ondes (602) ;

dans lequel le premier parcours de mesure s'étend le long du premier guide d'ondes (601) ; et

dans lequel le deuxième parcours de mesure s'étend le long du deuxième guide d'ondes (602) qui présente une longueur physique différente de celle du premier guide d'ondes (601).

5. Dispositif de mesure de niveau de remplissage selon l'une des revendications précédentes,

dans lequel le moyen d'évaluation (110) est conçu pour calculer le produit de la permittivité et de la perméabilité du milieu de recouvrement au-dessus de la surface de produit de remplissage ou de la surface de couche de séparation pour calculer la position de la surface de produit de remplissage ou la position de la couche de séparation.

6. Dispositif de mesure de niveau de remplissage selon l'une des revendications 1 à 3 ou 5, le moyen de détection de courbe d'écho présentant :

un premier guide d'ondes (701) et un deuxième guide d'ondes (702) ;

dans lequel le premier parcours de mesure s'étend le long du premier guide d'ondes (701) ; et

dans lequel le deuxième parcours de mesure s'étend le long du deuxième guide d'ondes (702) qui présente la même longueur physique que le premier guide d'ondes (701).

7. Dispositif de mesure de niveau de remplissage selon la revendication 6,

dans lequel le deuxième guide d'ondes (702) présente un diélectrique pour prolonger le temps de propagation du deuxième signal de mesure le long du deuxième parcours de mesure.

8. Dispositif de mesure de niveau de remplissage selon l'une des revendications 1 à 3 ou 5,

dans lequel le moyen de détection de courbe d'écho présente un seul guide d'ondes coaxial (801) pour conduire les deux signaux de mesure ;

dans lequel le premier signal de mesure est guidé le long de la surface extérieure du guide d'ondes coaxial (801) ; et dans lequel le deuxième signal de mesure est guidé à l'intérieur du guide d'ondes coaxial (801).

9. Dispositif de mesure de niveau de remplissage selon la revendication 8,

dans lequel l'intérieur du guide d'ondes coaxial (801) est au moins partiellement rempli d'un diélectrique afin que le temps de propagation du deuxième signal de mesure le long du deuxième parcours de mesure soit plus long que le temps de propagation du premier signal de mesure le long du premier parcours de mesure.

10. Agencement de mesure de niveau de remplissage pour mesurer le niveau de remplissage dans un récipient, présentant :

un dispositif de mesure de niveau de remplissage selon l'une des revendications 1 à 9 ; et un récipient (100) destiné à recevoir un produit de remplissage dont le niveau de remplissage doit être déterminé par le dispositif de mesure de niveau de remplissage.

11. Utilisation d'un dispositif de mesure de niveau de remplissage selon l'une des revendications 1 à 9 pour déterminer le produit de la permittivité et de la perméabilité d'un milieu de recouvrement au-dessus de la surface de produit de remplissage ou de la surface de couche de séparation.

12. Procédé pour mesurer un niveau de remplissage en utilisant des ondes électromagnétiques, le procédé présentant les étapes suivantes :

détection d'une première et d'une deuxième courbe d'écho ; évaluation de la première et de la deuxième courbe d'écho pour calculer à partir de celles-ci au moins une valeur caractéristique pour un milieu de recouvrement qui se trouve au-dessus de la surface de produit de remplissage ou de la surface de couche de séparation ; dans lequel la première courbe d'écho représente les conditions de réflexion le long d'un premier parcours de mesure (601, 701, 801, 905) le long duquel un premier signal de mesure se déplace vers la surface de produit de remplissage ou la surface de couche de séparation ; dans lequel la deuxième courbe d'écho représente les conditions de réflexion le long d'un deuxième parcours de mesure (602, 702, 802, 906) le long duquel un deuxième signal de mesure se déplace vers la surface de produit de remplissage ou la surface de couche de séparation ; dans lequel les deux signaux de mesure prennent des temps de propagation différents jusqu'à la surface de produit de remplissage ou la surface de couche de séparation (105), même s'ils ont été émis simultanément ; dans lequel les deux signaux de mesure sont des signaux électromagnétiques ; dans lequel ladite au moins une valeur caractéristique est le produit de la perméabilité et de la permittivité.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

EP 2 652 465 B1

1401     1402     1403     1404     1405

☐ → ☐ → ☐ → ☐ → ☐

**Fig. 14**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006019191 A1
- WO 2010071564 A1
- WO 2006103200 A1
- EP 1906158 A1

**In der Beschreibung aufgeführte Nicht-Patentliteratur**

- **PETER DEVINE.** *Füllstandmessung mit Radar Leitfaden für die Prozessindustrie,* ISBN 3-00-008216-6